# EUROPEAN PATENT APPLICATION

(11) **EP 4 635 827 A1**
(43) Date of publication of application: **22.10.2025**
(21) Application number: 25170822.8
(22) Date of filing: 15.04.2025
(51) Int. Cl.: B62B 3/02, B62B 3/10, B62B 5/06

(54) **ADJUSTABLE WELDING TRANSPORTATION CARTS**

(30) Priority: 15.04.2024 US 202463634166 P; 14.04.2025 US 202519178412
(71) Applicant: Illinois Tool Works Inc., Glenview IL 60025 (US)
(72) Inventor: LAHTI, Thomas D., Glenview, 60025 (US); UITENBROEK, Connor D., Glenview, 60025 (US)
(74) Representative: HGF

(57) **Abstract**

An adjustable welding cart (10) includes: a base having a front assembly (30) and a rear assembly (40); the front assembly (30) including: front wheels (50), a front support platform (60) having a front end and a rear end, and two parallel rails (70), each rail having a front end fixedly attached to the front support platform; and the rear assembly (40) including: rear wheels (80), a rear support platform (90) having a front end and a rear end, and two rail channels (100) opening proximate the front end of the rear support platform, each rail channel (100) extending through the length of the rear support platform and configured to receive the rear end of one of the two parallel rails (70). The welding cart (10) can transition between a plurality of different length configurations by adjusting the position of the rails with respect to the rail channels, including between configurations supporting a welding-type power supply with or without a gas bottle.

## Description

### Related Applications

The present application claims the benefit of U.S. Provisional Patent Application Serial No. 63/634,166, filed April 15, 2024, entitled "ADJUSTABLE WELDING TRANSPORTATION CARTS." The entirety of U.S. Provisional Patent Application Serial No. 63/634,166 is expressly incorporated herein by reference.

### Field of the Disclosure

The present disclosure relates generally to welding transportation carts and, more particularly, to adjustable welding transportation carts.

### Background

In the arc welding industry, a welding power supply is often times mounted to a welding cart, for example a running gear cart. The running gear cart enables the welding power supply, consumables, and/or accessories to be transported with ease to different jobs in an area.

Approximately 20% of welders select to carry, on the welding running gear cart, one or more large gas bottles/cylinders of inert arc-shielding gases or other gases for use during welding. The other 80% of welders use bulk gas delivery methods, and do not require large gas bottles/cylinders on location.

Welding running gear carts are typically configured to carry one or more gas bottles/cylinders, used on location by approximately 80% of welders. However, for the approximately 20% of welders that use bulk gas delivery methods, this additional space is unused and makes the welding cart much longer than needed.

There is therefore a need in the industry for an adjustable welding running gear cart, able to accommodate situations where a welder is using either a bulk gas delivery method, or transporting gas bottles/cylinders.

### Summary

An adjustable welding running gear cart is disclosed, substantially as illustrated by and described in connection with at least one of the figures, and as set forth more completely in the claims.

### Brief Description of the Drawings

These and other advantages of the present disclosure may be readily understood with reference to the following specifications and attached drawings wherein:
FIG. 1 is a perspective view of an example adjustable welding cart, in accordance with aspects of the disclosure.
FIG. 2 is a perspective view of the example adjustable welding cart of FIG. 1, in which the cart is adjusted to an elongated configuration for supporting both a welding-type power supply and at least one gas bottle.
FIG. 3A is a front perspective view of the example adjustable welding cart of FIG. 1, in which the cart is adjusted to a shortened configuration for supporting a welding-type power supply in the absence of at least one gas bottle.
FIG. 3B is a rear perspective view of the example adjustable welding cart of FIG. 1, in the configuration shown in FIG. 3A.
FIG. 4 is a perspective view of the example adjustable welding cart of FIG. 1, further including a storage box supported on the welding cart, in a first example configuration.
FIG. 5 is a perspective view of the example adjustable welding cart of FIG. 1, further including the storage box and the welding cart in a second example configuration.

The figures are not necessarily to scale. Where appropriate, the same or similar reference numerals are used in the figures to refer to similar or identical elements.

### Detailed Description

Preferred embodiments of the present disclosure may be described herein below with reference to the accompanying drawings. In the following description, well-known functions or constructions are not described in detail because they may obscure the disclosure in unnecessary detail. For this disclosure, the following terms and definitions shall apply.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the term "exemplary" means serving as a non-limiting example, instance, or illustration. As utilized herein, the terms "e.g." and "for example" set off lists of one or more non-limiting examples, instances, or illustrations.

As used herein, the word "approximately," when used to modify or describe a value, means reasonably close to that value.

As used herein, the term "attach" means to affix, couple, connect, join, fasten, link, and/or otherwise secure.

Disclosed example welding carts include a base having a front assembly and a rear assembly. The front assembly includes two or more wheels. The wheels can be either rigid, or able to swivel (e.g., swivel caster wheel able to swivel and turn), and optionally lockable. The front assembly also includes a front support platform having a front end and a rear end, with a top surface configured to accept and support a welding power supply. For example, the top surface of the front support platform can have a number of engagement features for reversible attachment to matching features on a welding power supply (e.g., locking latches having an engaged position and a released position).

The front assembly also includes two parallel rails, each rail having a front end fixedly attached to the front support platform. In certain embodiments, each rail has an upper face with one or more overhanging support lip configured to support a welding power supply.

The front support platform can also have a skirt extending along the perimeter of the front support platform and transverse to the front support platform. In some embodiments, the skirt is configured to facilitate alignment and attachment of the front end of each parallel rail proximate the rear end of the front support platform.

In some examples, the front assembly also has a handle attached to the front support platform (e.g., for pulling and/or steering the cart).

The rear assembly includes two or more wheels, which can also be either rigid, or able to swivel (e.g., swivel caster wheel able to swivel and turn), and optionally lockable. In some embodiments, the wheels attached to the rear assembly can also be larger than the wheels attached to the front assembly.

The rear assembly also has a rear support platform having a front end and a rear end, with two rail channels opening proximate the front end. Each rail channel extends through the length of the rear support platform, and is configured to receive the rear end of one of the two parallel rails attached to the front support platform.

The rear assembly can also have a bottle support platform. In certain embodiments the bottle support platform includes at least one post or vertical support extending vertically from the rear support platform and coupled to a lateral support bar having a nest, receptacle, pocket, or indentation configured to support a gas bottle placed on the bottle support platform. In one embodiment, the nest can be cushioned with one or more pads. In another embodiment, at least one post or vertical support extending vertically from the rear support platform can be telescoping, foldable, and/or detachable.

The adjustable welding carts disclosed herein can transition between a plurality of different length configurations by adjusting the position of the rails with respect to the rail channels, including between configurations supporting a welding-type power supply with or without at least one gas bottle. For example, the adjustable welding carts disclosed herein can be adjusted to an elongated configuration wherein the front assembly provides support for a welding power supply, and the rear assembly provides support for at least one gas bottle. Likewise, the adjustable welding carts disclosed herein can be adjusted to a shortened configuration wherein the front support platform and the rear support platform provide support for a welding power supply.

To facilitate the transition between the various configurations, each rail channel has a rail position lock configured to set and secure a relative position between the rail channel and the corresponding rail. Likewise, each rail has a plurality of rail engagement features distributed along the length of the rail. As illustrated below, the rail position lock of each rail channel is configured to interface with each corresponding rail engagement feature (e.g., set screw, bolt and nut, ball detent, or combinations thereof).

The adjustable welding carts disclosed herein can also have a storage compartment, which can be coupled to the front assembly, the rear assembly, or both. In one embodiment, when the cart is adjusted to an elongated configuration (to accommodate both a welding-type power supply and at least one gas bottle), the storage compartment is coupled to the front support platform and configured to mount the welding-type power supply (while the rear support platform supports the at least one gas bottle). In another embodiment, when the cart is adjusted to a shortened configuration, the storage compartment is coupled to both the front support platform and the rear support platform, and configured to mount the welding-type power supply.

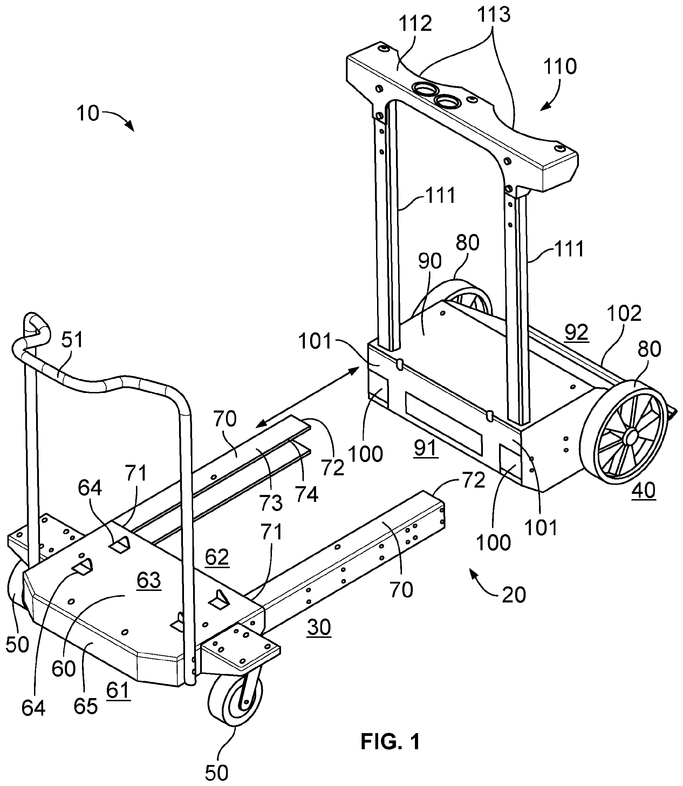

FIG. 1 illustrates a perspective view of an example adjustable welding cart 10. The adjustable welding cart 10 includes a base 20, having a front assembly 30 and rear assembly 40. The front assembly 30 includes two or more front wheels 50. The front wheels 50 can have a fixed direction or may be capable of swiveling (e.g., swivel caster wheel able to swivel and turn). In some examples, swiveling wheels can be locked in a particular direction, and/or the wheels may be provided with a brake that can be engaged to selectively inhibit motion.

The front assembly 30 also includes a front support platform 60 having a front end 61 and a rear end 62, with a top surface 63 configured to accept and support a welding-type power supply 120. For example, the top surface 63 of the front support platform 60 can have a number of engagement features 64 for alignment and/or attachment to complementary features on a welding-type power supply 120 (e.g., locking latches having an engaged position and a released position).

The front assembly 30 also includes two parallel rails 70 extending rearward from the front assembly 30. Each rail 70 has a front end 71 that is attached to the front support platform 60. The rails 70 may be attached to the rear end 62 of the front support platform 60, to an underside of the front support platform 60, on the sides of the front support platform 60, and/or at any other position on the front support platform 60. The rails 70 are fixedly attached to the front assembly 30 in the illustrated example, such that the position of the rails 70 with respect to the front assembly 30 is not adjustable.

Each of the example rails 70 has an upper face 73 with one or more overhanging support lips 74. The upper face 73 and the support lips 74 may be used to attach the rails 70 to the rear assembly 40.

The front support platform 60 can also have a front support platform skirt 65 extending along the perimeter of the front support platform 60 and transverse to the front support platform 60. The skirt 65 may facilitate alignment and attachment of the front end 71 of each parallel rail 70 proximate the rear end 62 of the front support platform 60.

The front assembly 30 also has a handle 51 attached to the front support platform 60 (e.g., for pulling and/or steering the cart). In some other examples, the handle 51 may be omitted or removable, such as when the power supply 120 mounted to the cart 10 is equipped with handles.

The rear assembly 40 includes two or more rear wheels 80. The rear wheels 80 can have a fixed direction or may be capable of swiveling (e.g., swivel caster wheel able to swivel and turn). In some examples, the rear wheels 80 are swiveling wheels which can be locked in a particular direction, and/or the wheels may be provided with a brake that can be engaged to selectively inhibit motion.

The rear assembly 40 also has a rear support platform 90 having a front end 91 and a rear end 92. The rear support platform 90 includes rail channels 100 that correspond to the rails 70 in width, height, and spacing, such that the rail channels 100 receive the rails 70 to connect the front assembly 30 to the rear assembly 40.

Each of the example rail channels 100 includes a rail channel opening 101 proximate the front end 91 of the rear support platform 90. Each rail channel 100 extends through the length of the rear support platform 90, and is configured to receive the rear end 72 of one of the two parallel rails 70 attached to the rear end 62 of the front support platform 60. The example rails 70 and/or rail channels 100 may include support elements, such as slide bearings, rollers, and/or other low-friction devices or coatings to facilitate low-friction insertion and/or adjustment of the parallel rails 70 in the rail channels 100.

The rear assembly 40 also has a bottle support platform 102 and a bottle rest 110. The bottle support platform 102 extends from a rear end of the rear assembly 40, and has a surface area sufficient to hold one or more gas bottles (e.g., upright), which may be at least partially supported and/or stabilized by the bottle rest 110. The bottle rest 110 includes at least one post or vertical support 111 extending vertically from the rear support platform 90 and coupled to a lateral support bar 112 having a nest 113 (e.g., receptacle(s), pocket(s), or indentation(s)). The nest 113 supports one or more gas bottles placed on the bottle support platform 102 and which lean against the bottle rest 110 for stability. In some examples, the nest 113 is cushioned with one or more pads. In some examples, the at least one post or vertical support 111 extending vertically from the rear support platform 90 can be telescoping, foldable, and/or detachable, to enable a power supply 120 positioned on the cart 10 to rest on the rear support platform 90.

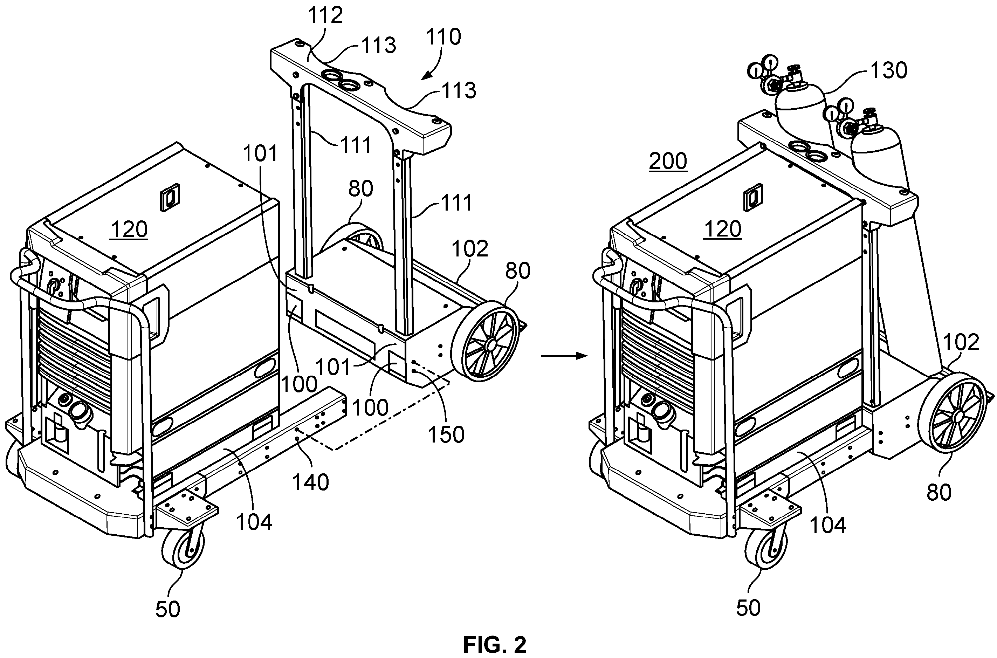

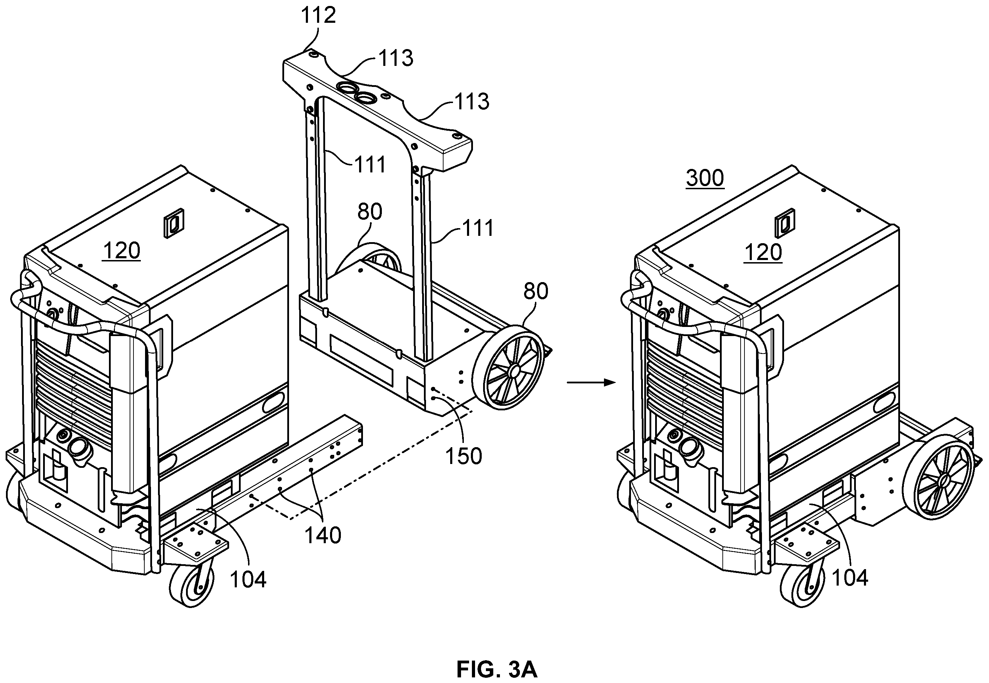

As illustrated in FIGS. 2 and 3A-3B, the example adjustable welding cart 10 can transition between multiple different length configurations by adjusting the position of the rails 70 with respect to the rail channels 100. The different length configurations of the example cart 10 include at least one configuration that supports a welding-type power supply (e.g., a larger welding-type power supply) with at least one gas bottle positioned on the bottle support platform 102, and at least one configuration that supports a welding-type power supply without a gas bottle (e.g., a smaller welding-type power supply).

For example, as illustrated in FIG. 2, the adjustable welding cart 10 can be adjusted to an elongated configuration 200, in which the front support platform 60 of the front assembly 30 and the rear support platform 90 of the rear assembly 40 provide support for a welding-type power supply 120, and the bottle support platform 102 of the rear assembly 40 provides support for at least one gas bottle 130.

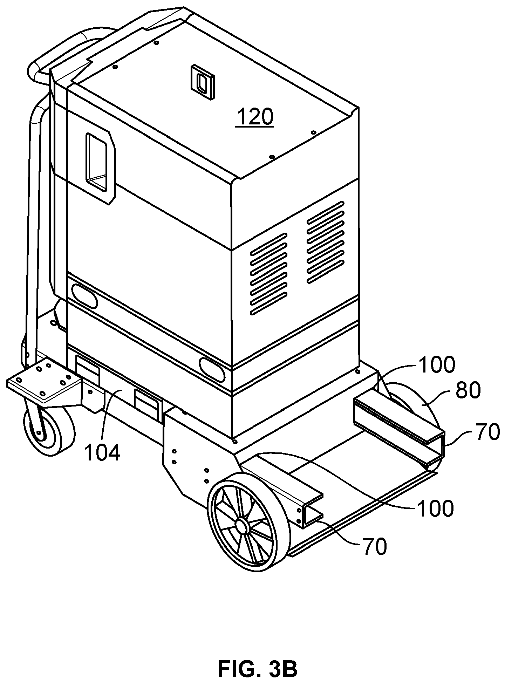

As illustrated in FIGS. 3A and 3B, the example adjustable welding cart 10 can also be adjusted to a shortened configuration 300, in which the front support platform 60 and the rear support platform 90 provide support for a welding-type power supply 120 (i.e., in the absence of any gas bottles 130). In at least one shortened configuration (e.g., the configuration 300), the rails 70 extend completely through the length of the rear support platform 90 and above the bottle support platform 102. In such configurations, the rails 70 prevent support of a gas bottle on the bottle support platform 102, but allow for a more compact footprint of the welding cart 10 than conventional adjustable carts in configurations in which a gas bottle is not used.

To facilitate the transition between the various configurations, each rail channel 100 has a rail position lock 150 configured to set and secure a relative position of the rail 70 with respect to the corresponding rail channel 100. For example, the rail position lock 150 may include a set screw or similar device which can be tightened onto the rail 70 to secure a desired position. In other examples, the rail position lock 150 may cooperate with corresponding rail engagement features 140 distributed along the length of the rail 70. The rail engagement features 140 and/or the rail position lock 150 may be positioned to correspond to predetermined dimensions of the welding-type power supply 120. Example rail engagement features 140 and rail position locks may include holes for insertion of a nut-and-bolt combination, threaded holes as the rail engagement feature 140 to allow a screw to be attached through the rail position lock 150 into the rail engagement feature 140, a selector pin and cotter pin, and/or any other type of fastener.

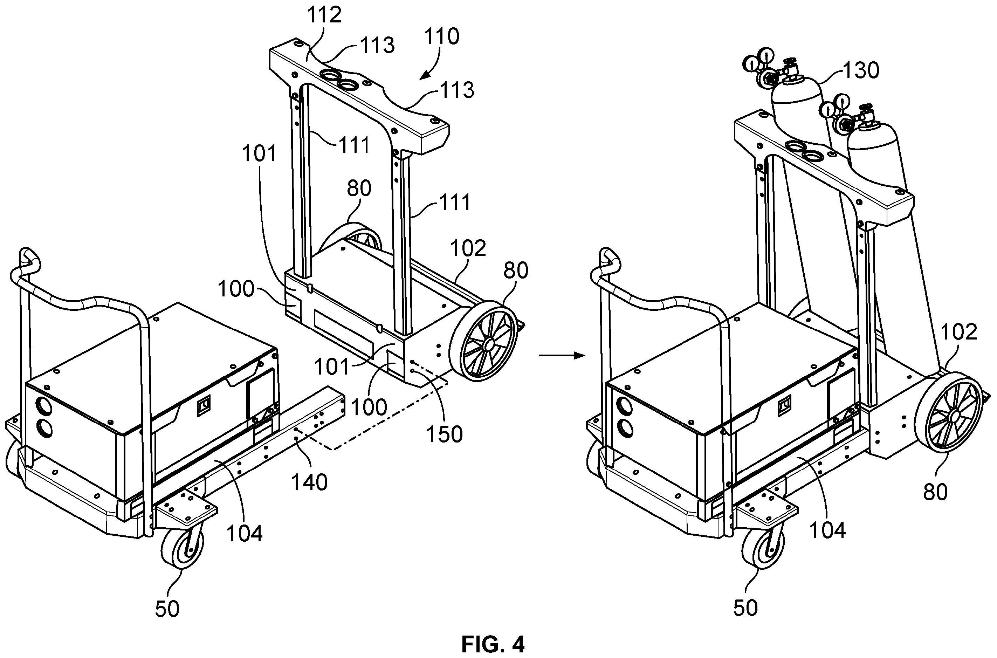

FIG. 4 is a perspective view of the example adjustable welding cart 10 of FIG. 1, further including a storage box 400 supported on the welding cart 10, in a first example configuration (e.g., an elongated configuration). In the example of FIG. 4, the storage box 400 is secured to the front assembly 30 (e.g., to the front support platform 60) via fasteners, clips, clamps, and/or any other attachment technique. The power supply 120 may be secured to a top of the storage box 400, such as via fasteners, clips, clamps, and/or any other attachment technique.

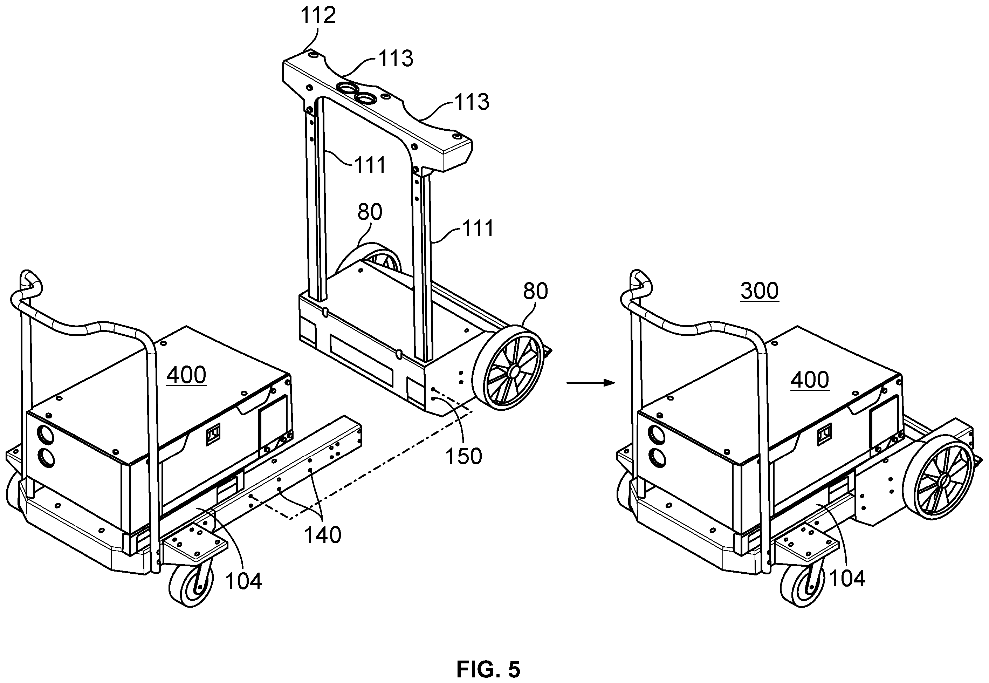

FIG. 5 is a perspective view of the example adjustable welding cart 10 of FIG. 1, including the storage box 400, in a second example configuration (e.g., a shortened configuration). In the example of FIG. 5, the storage box 400 (and the power supply 120 attached to the top of the storage box 400) rest on both the front support platform 60 and the rear support platform 90.

In examples in which there is a difference in height between the front support platform 60 and the rear support platform 90, the storage box 400 or the power supply 120 may be coupled to the lower of the front support platform 60 and the rear support platform 90 using the support bracket 104. The support bracket 104 may be attached directly to the front support platform 60 and/or the power supply 120 or storage box 400, and/or the power supply 120 or storage box 400 may be attached to the front support platform 60 through the support bracket 104. In other examples, the power supply 120 and/or the storage box 400 may be configured with extendable feet to contact the front support platform 60 and/or the rear support platform 90 when the power supply 120 and/or the storage box 400 are supported on both front support platform 60 and the rear support platform 90 and there is a difference in height.

The power supply 120 and/or the storage box 400 may be connected to the front support platform 60 or the rear support platform 90 directly (e.g., in longer configurations of the cart 10) and/or via the brackets 104. The brackets 104 may be used to adapt the engagement features 64 of the front support platform 60 and/or engagement features of the rear support platform 90 to the coupling features of the housing of the power supply 120.

While the present methods and/or systems has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.
Certain embodiments of the invention are described in the following clauses:
Clause 1. An adjustable welding cart, comprising:
   a base having a front assembly and a rear assembly;
   the front assembly comprising:
      two or more front wheels,
      a front support platform having a front end and a rear end, and
      two parallel rails, each rail having a front end fixedly attached to the front support platform; and
   the rear assembly comprising:
      two or more rear wheels,
      a rear support platform having a front end and a rear end, and two rail channels opening proximate the front end of the rear support platform, each rail channel extending through the length of the rear support platform and configured to receive the rear end of one of the two parallel rails;
   wherein the welding cart can transition between a plurality of different length configurations by adjusting the position of the rails with respect to the rail channels, including between configurations supporting a welding-type power supply with or without at least one gas bottle.
Clause 2. The adjustable welding cart as defined in clause 1, wherein the front assembly has a handle attached to the front support platform.
Clause 3. The adjustable welding cart as defined in clause 1, wherein each parallel rail has an upper face with an overhanging support lip.
Clause 4. The adjustable welding cart as defined in clause 1, wherein the front support platform comprises a skirt extending along the perimeter of the front support platform and transverse to the front support platform, the skirt configured to facilitate alignment and attachment of the front end of each parallel rail proximate the rear end of the front support platform.
Clause 5. The adjustable welding cart as defined in clause 1, wherein the rear assembly further comprises a bottle support platform.
Clause 6. The adjustable welding cart as defined in clause 5, wherein the bottle support platform is detachable.
Clause 7. The adjustable welding cart as defined in clause 5, further comprising a vertical support extending vertically from the rear support platform and coupled to a lateral support bar having a nest configured to support a bottle placed on the bottle support platform.
Clause 8. The adjustable welding cart as defined in clause 7, wherein the two posts are telescoping or foldable.
Clause 9. The adjustable welding cart as defined in clause 7, wherein the nest is cushioned with one or more pads.
Clause 10. The adjustable welding cart as defined in clause 5, wherein the parallel rails extend over the bottle support platform in at least one of the configurations.
Clause 11. The adjustable welding cart as defined in clause 1, wherein the cart is adjustable to an elongated configuration wherein the front assembly provides support for a welding power supply, and the rear assembly provides support for at least one gas bottle.
Clause 12. The adjustable welding cart as defined in clause 1, wherein the cart is adjustable to a shortened configuration wherein the front support platform and the rear support platform provide support for a welding power supply.
Clause 13. The adjustable welding cart as defined in clause 1, wherein each rail channel comprising a rail position lock configured to secure a relative position between the rail channel and the corresponding rail.
Clause 14. The adjustable welding cart as defined in clause 13, wherein each rail comprises a plurality of rail engagement features distributed along the length of the rail, and the rail position lock of each rail channel is configured to interface with the rail engagement features.
Clause 15. The adjustable welding cart as defined in clause 1, wherein the rails are longer than a length of the rear support platform.
Clause 16. The adjustable welding cart as defined in clause 1, wherein at least the front wheels or the rear wheels are configured to swivel.
Clause 17. The adjustable welding cart as defined in clause 1, further comprising a storage compartment coupled to the front support platform or the rear support platform and configured to mount the welding-type power supply.

## Claims

1. An adjustable welding cart, comprising:
a base having a front assembly and a rear assembly;
the front assembly comprising:
two or more front wheels,
a front support platform having a front end and a rear end, and
two parallel rails, each rail having a front end fixedly attached to the front support platform; and
the rear assembly comprising:
two or more rear wheels,
a rear support platform having a front end and a rear end, and
two rail channels opening proximate the front end of the rear support platform, each rail channel extending through the length of the rear support platform and configured to receive the rear end of one of the two parallel rails;
wherein the welding cart can transition between a plurality of different length configurations by adjusting the position of the rails with respect to the rail channels, including between configurations supporting a welding-type power supply with or without at least one gas bottle.

2. The adjustable welding cart as defined in claim 1, wherein the front assembly has a handle attached to the front support platform.

3. The adjustable welding cart as defined in claim 1 or claim 2, wherein each parallel rail has an upper face with an overhanging support lip.

4. The adjustable welding cart as defined in any one of claims 1 to 3, wherein the front support platform comprises a skirt extending along the perimeter of the front support platform and transverse to the front support platform, the skirt configured to facilitate alignment and attachment of the front end of each parallel rail proximate the rear end of the front support platform.

5. The adjustable welding cart as defined in any one of claims 1 to 4, wherein the rear assembly further comprises a bottle support platform.

6. The adjustable welding cart as defined in claim 5, wherein the bottle support platform is detachable.

7. The adjustable welding cart as defined in claim 5 or claim 6, further comprising a vertical support extending vertically from the rear support platform and coupled to a lateral support bar having a nest configured to support a bottle placed on the bottle support platform.

8. The adjustable welding cart as defined in claim 7, wherein the two posts are telescoping or foldable.

9. The adjustable welding cart as defined in claim 7 or claim 8, wherein the nest is cushioned with one or more pads.

10. The adjustable welding cart as defined in any one of claims 5 to 9, wherein the parallel rails extend over the bottle support platform in at least one of the configurations.

11. The adjustable welding cart as defined in any one of claims 1 to 10, wherein the cart is adjustable to an elongated configuration wherein the front assembly provides support for a welding power supply, and the rear assembly provides support for at least one gas bottle.

12. The adjustable welding cart as defined in any one of claims 1 to 11, wherein the cart is adjustable to a shortened configuration wherein the front support platform and the rear support platform provide support for a welding power supply.

13. The adjustable welding cart as defined in any one of claims 1 to 12, wherein each rail channel comprising a rail position lock configured to secure a relative position between the rail channel and the corresponding rail, and optionally
wherein each rail comprises a plurality of rail engagement features distributed along the length of the rail, and the rail position lock of each rail channel is configured to interface with the rail engagement features.

14. The adjustable welding cart as defined in any one of claims 1 to 13, wherein the rails are longer than a length of the rear support platform.

15. The adjustable welding cart as defined in any one of claims 1 to 14, wherein at least the front wheels or the rear wheels are configured to swivel, further comprising a storage compartment coupled to the front support platform or the rear support platform and configured to mount the welding-type power supply.
